# EUROPEAN PATENT SPECIFICATION

(11) **EP 3 366 729 B1**
(45) Date of publication and mention of the grant of the patent: **20.11.2019**
(21) Application number: 17305215.0
(22) Date of filing: 28.02.2017
(51) Int. Cl.: C09D 5/00, C09D 5/12, C09D 5/18, F02C 7/25, B32B 15/08, B32B 15/20

(54) **TURBINE ENGINE MEMBER, SUCH AS AN ACCESSORY GEARBOX FOR EXAMPLE**
TURBINENMOTORELEMENT, WIE EIN HILFSGETRIEBE ZUM BEISPIEL
ÉLÉMENT DE MOTEUR DE TURBINE, TEL QU'UNE BOÎTE DE VITESSES ACCESSOIRE PAR EXEMPLE

(43) Date of publication of application: 29.08.2018
(73) Proprietor: Safran Transmission Systems, 92700 Colombes (FR)
(72) Inventor: PIWOWAR, Katarzyna, 77550 MOISSY-CRAMAYEL (FR); MENDALA, Boguslaw, 41-103 Siemianowice Slakie (PL); PONDO, Tomasz, 77550 MOISSY-CRAMAYEL (FR); SWADZBA, Lucjan, 43-100 Tychy (PL); SWADZBA, Radoslaw, 43-100 Tychy (PL); TRACZ, Jaroslaw, 41-400 Myslowice (PL); WITALA, Bartosz, 41-506 Chorzow (PL)
(74) Representative: Robert, Mathias

(56) References cited:
- EP-A1- 2 366 871
- GB-A- 2 117 807
- GB-A- 2 120 580
- GB-A- 2 181 246
- US-A- 4 052 526
- US-A- 5 976 997
- US-A1- 2013 192 982
- DATABASE WPI Week 201023 Thomson Scientific, London, GB; AN 2009-S24785 XP002772606, & RU 2 372 577 C1 (MOSC SALYUT MECH ENG PRODN ENTERP) 10 November 2009 (2009-11-10)

## Description

The present invention relates to a turbine engine member, such as an accessory gearbox for example.

In the downstream direction, i.e. in the gas flowing direction, a turbojet engine comprises a fan, one or more compressor stage(s), for instance a high-pressure compressor and a low-pressure compressor, a combustion chamber, one or more turbine stage(s), for instance a high-pressure turbine and a low-pressure turbine, and a gas exhaust nozzle. A turbine corresponds to each compressor, with both items being connected by a shaft, thus forming a high-pressure body and a low-pressure body, for instance.

A portion of the power generated by a turbojet engine is used for supplying various items of equipment of the turbojet engine with power. Such power is mechanically taken from the high-pressure body shaft of the turbojet engine by a power take-off shaft which drives an input shaft of an accessory gearbox.

The accessory gear box is also known as AGB, and is a gearbox containing a gear connected to some items of equipment or accessories, such as for instance an electric generator, a starter, an alternator, fuel or oil hydraulic pumps, etc. Such various accessories are mechanically driven by the gear of the AGB which transmits thereto the power taken from the high-pressure shaft, through the input shaft in the AGB.

The AGB generally comprises a cast box comprising a cast wall defining a recess for accommodating the accessories drive gear. Each gear wheel is integral with a drive shaft connected to one accessory. The various accessories driven by the AGB are directly mounted on the box, with the accessories drive shafts going through the box wall to drive same.

A need now exists to reduce the weight of the AGB. One of the solutions considered consists in reducing the weight of the box by using an aluminium-based alloy and/or a low thickness box. In both cases, the box must be able to resist high thermal stress, specifically an extended fire exposition.

The box of the AGB must then be able to resist a fire exposition at 1,100°C for 15 minutes, according to PN ISO 2685 standard, for instance, which is difficult to obtain with a box having a low thickness and/or with a box made of an aluminium alloy (with such alloys generally having a melting temperature ranging from 600 to 700°C for instance).

The invention more particularly aims at providing a simple, efficient and cost-effective solution to this problem.

For this purpose, it provides for a turbine engine member, such as an accessory gearbox for example, comprising at least one wall made of an aluminium alloy, characterized in that said wall is coated with a set of layers comprising:
- a first layer of a primer layer covering said wall,
- a second layer of an intumescent material, covering the first layer,
- a third top layer, covering the second layer.

Such a set of layers makes it possible to efficiently protect the aluminium alloy wall, so that it can resist the specifications relating to thermal stress. Said wall can then be made of an aluminium alloys and/or have a small thickness, so that weight thereof is limited.

Such a set of layers also provides for a good protection against corrosion and a good plasticity facilitating the implementation and positioning on the wall thereof. Good plasticity properties provides proper adhesion of the layers during operating conditions (vibrations). Such layers are inexpensive, too.

The wall may be a portion of an accessory gearbox or a member accommodating transmission element, for instance.

The wall may be made of an aluminium alloy of the type AMS 7050 or AMS 7075-wrought, or AlSi7Mg casting.

Such an alloy is relatively light and has good resistance to thermal stress.

The first layer is an epoxy curing polyamides primer layer, for example of the type known under the references or trademarks:
- Karbokor Miox,
- Temacoat GPL-S Primer,
- Carboguard 888,
- MEGAprotect EP10PZ,
- Epoksykor Primer,
- Almakolor Kombi.

Such type of layers provides a good bonding with an aluminium alloy material, while being resistant to the specifications relating to thermal stress.

The second layer is one of the following type:
- water-based intumescent protective coating, for example of the type known under the references or trademarks:
   - FireFilm 70-60,
   - FireFilm 70-120,
- epoxy-based intumescent protective coating, for example of the type known under the references or trademarks:
   - FireProof Solvent,
   - International Chartek 7.

Such type of layer ensures a good thermal protection and is used as a fire barrier intended to protect the gear box wall.

The third layer is of top coat of the following type:
- polyurethane enamel hardened isocyanate, for example of the type known under the references or trademarks:
   - Karbopur,
   - Purmal,
- polyurethane paint hardened aliphatic isocyanate, for example of the type known under the reference or trademark Temathane 50,
- polyurethane paint hardened aliphatic polyisocyanate, for example of the type known under the reference or trademark MEGAprotect PUR 30/50,
- polyurethane paint, for example of the type known under the reference or trademark Hempathane Topcoat 55210,
- waterborne acrylic paint, for example of the type known under the reference or trademark Rezistol Emalia AQ,
- acrylic/aliphatic polyurethane paint, for example of the type known under the reference or trademark Carbothane PU134,
- polyvinyl paint, for example of the type known under the reference or trademark Almavinyl.

Such type of layer makes it possible to protect the second layer while resisting to specifications relating to thermal stress.

The thickness of the primer layer ranges from 50 to 100 µm (microns), preferably from 70 to 90 µm (microns), is preferably 75 µm (microns).

The thickness of the second layer ranges from 250 to 1,000 µm (microns), preferably from 400 to 600 µm (microns) is preferably 500 µm (microns).

The thickness of the third layer ranges from 50 to 150 µm (microns), preferably from 80 to 120 µm (microns), is preferably 100 µm (microns). Optimum coatings thickness gives good fireproof properties, good adhesion and good corrosion resistance according to low weight gain of AGB component.

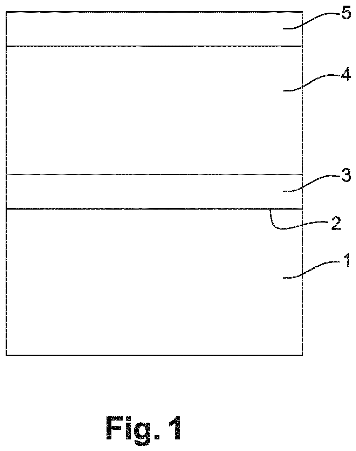

The invention will be better understood, and other details, characteristics and advantages of the invention will appear upon reading the following description given by way of a non-restrictive example while referring to the appended drawing wherein Figure 1 is a schematic sectional view of the member according to the invention.

Figure 1 schematically illustrates a wall 1 of a member of a turbine engine, according to one embodiment of the invention, such as an accessory gearbox, for instance.

The external surface 2 of the wall 1 is coated with a set of layers, i.e. a first layer 3, a second layer 4 and a third layer 5. The external surface 2 is intended to be exposed to high thermal stresses, such as an extended fire exposition for instance.

The first layer 3 is directly applied onto the external surface 2, the second layer 4 is directly applied onto the first layer 3 and the third layer 5 is directly applied onto the second layer 4. In an alternative solution that is not according to the invention, additional layers may be inserted between said first, second and third layers.

The wall 1 is made of an aluminium alloy, for instance AMS 7050, AMS 7075-wrought or AlSi7Mg casting. The thickness of the wall ranges from 3.5 mm to 10 mm, for instance.

The first layer 3 is a primer layer, for instance:
- epoxy curing polyamides primer layer, for example of the type known under the references or trademarks:
   - Karbokor Miox,
   - Temacoat GPL-S Primer,
   - Carboguard 888,
   - MEGAprotect EP10PZ,
   - Epoksykor Primer,
   - Almakolor Kombi.

The thickness of the first layer 3 ranges from 50 to 100 microns, preferably from 70 to 80 microns, and more preferably is of the order of 75 microns.

The second layer 4 is a fireproof coating made of an intumescent material, for instance:
- water-based intumescent protective coating, for example of the type known under the references or trademarks:
   - FireFilm 70-60,
   - FireFilm 70-120,
- epoxy-based intumescent protective coating, for example of the type known under the references or trademarks:
   - FireProof Solvent,
   - International Chartek 7.

The thickness of the second layer 4 ranges from 250 to 1,000 microns, preferably from 400 to 600 microns is preferably of the order of 500 microns.

The third layer 5 is a top coat for example:
- polyurethane enamel hardened isocyanate, for example of the type known under the references or trademarks:
   - Karbopur,
   - Purmal,
- polyurethane paint hardened aliphatic isocyanate, for example of the type known under the reference or trademark Temathane 50,
- polyurethane paint hardened aliphatic polyisocyanate, for example of the type known under the reference or trademark MEGAprotect PUR 30/50,
- polyurethane paint, for example of the type known under the reference or trademark Hempathane Topcoat 55210,
- waterborne acrylic paint, for example of the type known under the reference or trademark Rezistol Emalia AQ,
- acrylic/aliphatic polyurethane paint, for example of type known under the reference or trademark Carbothane PU134,
- polyvinyl paint, for example of type known under the reference or trademark Almavinyl.

The thickness of the third layer 5 ranges from 50 to 150 microns, preferably from 80 to 120 microns, and more preferably is of the order of 100 microns.

Such an assembly of layers provides an efficient protection to the wall 1, so that it can resist an extended fire exposure, specifically up to a temperature of about 1,100°C for 15 minutes.

## Claims

1. A turbine engine member, such as an accessory gearbox for example, comprising at least one wall (1) made of an aluminium alloy, **characterised in that** said wall (1) is coated with a set of layers comprising:
- a first layer (3) of a primer layer covering said wall, wash primer
- a second layer (4) of an intumescent material, covering the first layer,
- a third top layer (5), covering the second layer,
and wherein:
- the first layer (3) is an epoxy curing polyamides primer layer,
- the second layer (4) is of the following type:
∘ water-based intumescent protective coating, or
∘ epoxy-based intumescent protective coating, and
- the third layer (5) is of the following type:
∘ polyurethane enamel hardened isocyanate,
∘ polyurethane paint hardened aliphatic isocyanate, ∘ polyurethane paint hardened aliphatic polyisocyanate,
∘ polyurethane paint,
∘ waterborne acrylic paint,
∘ acrylic/aliphatic polyurethane paint,
∘ polyvinyl paint.

2. A member according to claim 1, **characterised in that** the wall (1) is made of an aluminium alloy of the type AMS 7050 or AMS 7075-wrought, or AlSi7Mg casting.

3. A member according to one of claims 1 to 2, **characterized in that** the thickness of the first layer (3) ranges from 50 to 100 µm (microns), preferably from 70 to 90 µm (microns), is preferably 75 µm (microns).

4. A member according to one of claims 1 to 3, **characterized in that** the thickness of the second layer (4) ranges from 250 to 1,000 µm (microns), preferably from 400 to 600 µm (microns), is preferably 500 µm (microns).

5. A member according to one of claims 1 to 4, **characterized in that** the thickness of the third layer (5) ranges from 50 to 150 µm (microns), preferably from 80 to 120 µm (microns), is preferably 100 µm (microns).

## Patentansprüche

1. Turbinentriebwerkselement, wie beispielsweise ein Hilfsgerätegetriebe, das mindestens eine Wand (1) aus Aluminiumlegierung umfasst, **dadurch gekennzeichnet, dass** die Wand (1) mit den folgenden Schichten überzogen ist:
- einer ersten Schicht (3) als Grundierung der Wand bestehend aus einem Haftgrundmittel,
- einer zweiten Schicht (4) aus einem aufquellenden Material, die die erste Schicht bedeckt,
- einer dritten Schicht (5) als Deckschicht, die die zweite Schicht bedeckt,
wobei:
- die erste Schicht (3) eine polyamidgehärtete Epoxidgrundierung ist,
- die zweite Schicht (4) eine:
aufquellende Schutzschicht auf Wasserbasis, oder
eine aufquellende Schutzschicht auf Epoxidbasis ist, und
- die dritte Schicht (5) eine Schicht ist aus:
Polyurethanlack, der mit Isocyanat gehärtet ist, Polyurethanlack, der mit aliphatischem Isocyanat gehärtet ist,
Polyurethanlack, der mit aliphatischem Polyisocyanat gehärtet ist,
Polyurethanfarbe,
Acrylfarbe (Wasserphase),
Acryl-Polyurethanfarbe bzw. aliphatischer Polyurethanfarbe,
Vinylharzfarbe.

2. Element nach Anspruch 1, **dadurch gekennzeichnet, dass** die Wand (1) aus einer Aluminiumlegierung vom Typ AMS 7050 oder AMS 7075 (geschmiedet) oder AlSi7Mg (Gusseisen) hergestellt ist.

3. Element nach einem der Ansprüche 1 bis 2, **dadurch gekennzeichnet, dass** die erste Schicht (3) 50 bis 100 µm (Mikrometer), vorzugsweise 70 bis 90 µm (Mikrometer) bzw. vorzugsweise 75 µm (Mikrometer) dick ist.

4. Element nach einem der Ansprüche 1 bis 3, **dadurch gekennzeichnet, dass** die zweite Schicht (4) 250 bis 1000 µm (Mikrometer), vorzugsweise 400 bis 600 µm (Mikrometer) bzw. vorzugsweise 500 µm (Mikrometer) dick ist.

5. Element nach einem der Ansprüche 1 bis 4, **dadurch gekennzeichnet, dass** die dritte Schicht (5) 50 bis 150 µm (Mikrometer), vorzugsweise 80 bis 120 µm (Mikrometer) bzw. vorzugsweise 100 µm (Mikrometer) dick ist.

## Revendications

1. Élément de moteur de turbine, tel qu'une boîte relais par exemple, comprenant au moins une paroi (1) en alliage d'aluminium, **caractérisé en ce que** ladite paroi (1) est revêtue d'un ensemble de couches comprenant :
- une première couche (3) d'une couche d'apprêt couvrant ladite paroi, peinture primaire réactive,
- une deuxième couche (4) d'un matériau intumescent, couvrant la première couche,
- une troisième première couche (5) couvrant la deuxième couche,
et dans lequel :
- la première couche (3) est une couche d'apprêt époxy durci aux polyamides,
- la deuxième couche (4) est du type suivant :
revêtement de protection intumescent à base d'eau, ou
revêtement de protection intumescent à base d'époxy, et
- la troisième couche (5) est du type suivant :
laque polyuréthane durcie à l'isocyanate,
laque polyuréthane durcie à l'isocyanate aliphatique,
laque polyuréthane durcie au polyisocyanate aliphatique
peinture polyuréthane,
peinture acrylique (phase aqueuse),
peinture polyuréthane acrylique/aliphatique,
peinture vinylique.

2. Élément selon la revendication 1, **caractérisé en ce que** la paroi (1) est fabriquée en alliage d'aluminium du type AMS 7050 ou AMS 7075 (forgée), ou AlSi7Mg (fonte).

3. Élément selon l'une des revendications 1 à 2, **caractérisé en ce que** l'épaisseur de la première couche (3) se trouve dans la plage 50 à 100 µm (microns), de préférence de 70 à 90 µm (microns), de préférence 75 µm (microns).

4. Élément selon l'une quelconque des revendications 1 à 3, **caractérisé en ce que** l'épaisseur de la deuxième couche (4) se trouve dans la plage 250 à 1 000 µm (microns), de préférence de 400 à 600 µm (microns), de préférence 500 µm (microns).

5. Élément selon l'une quelconque des revendications 1 à 4, **caractérisé en ce que** l'épaisseur de la troisième couche (5) se trouve dans la plage 50 à 150 µm (microns), de préférence de 80 à 120 µm (microns), de préférence 100 µm (microns).
